# EUROPEAN PATENT APPLICATION

(11) **EP 3 479 953 A1**
(43) Date of publication of application: **08.05.2019**
(21) Application number: 17820119.0
(22) Date of filing: 27.06.2017
(51) Int. Cl.: B24B 9/00, B24B 27/00, B24B 49/12

(54) **POLISHING DEVICE**

(30) Priority: 29.06.2016 JP 2016128725
(71) Applicant: Kawasaki Jukogyo Kabushiki Kaisha, Kobe-shi, Hyogo 650-8670 (JP)
(72) Inventor: FUJISAWA, Shinichi, Hyogo 650-8670 (JP); SASAKI, Keita, Hyogo 651-0083 (JP)
(74) Representative: Witte, Weller & Partner Patentanwälte mbB
(86) International application number: PCT/JP2017/023483
(87) International publication number: WO 2018/003765

(57) **Abstract**

A grinding device (10) includes a first arm (13) including at a tip thereof at least one grinding member (30) configured to grind a workpiece (40), the first arm (13) causing the at least one grinding member (30) to reciprocate linearly, and a second arm (13) including at a tip thereof a gripping part (20) configured to grip the workpiece (40), the second arm (13) causing the workpiece (40) to rock through repetitive two-way rotations.

## Description

### TECHNICAL FIELD

The present disclosure relates to a grinding device capable of grinding a workpiece for deburring, chamfering, etc.

### BACKGROUND ART

Known as a conventional deburring device is, for example, a deburring device disclosed in Patent Document 1. The deburring device is provided with a grindstone opposed to circumferential edges of end surfaces of workpieces and imparts rotary driving to the grinding stone to shift it along the circumferential edges of the end surfaces of the workpieces.

### [Reference Document of Conventional Art]

### [Patent Document]

[Patent Document 1] JP2016-078199A

### DESCRIPTION OF THE DISCLOSURE

### [Problems to be Solved by the Disclosure]

The deburring device disclosed in Patent Document 1 grinds only the circumferential edges of the end surfaces of the workpieces. If the end surfaces of the workpieces extending to the circumferential edges need to be ground, the grindstone has to be reattached to adjust its position with respect to the workpieces. This requires time and effort. In addition, the rotating grindstone may fail to grind, for example, tight spots (small areas) and smooth parts.

The present disclosure is made in view of solving the above problems, and one purpose thereof is to provide a grinding device capable of easily performing grinding including deburring and chamfering at tight spots.

### [Summary of the Disclosure]

In order to achieve the purpose, a grinding device according to one aspect of the present disclosure includes a first arm including at a tip thereof at least one grinding member configured to grind a workpiece, the first arm causing the at least one grinding member to reciprocate linearly, and a second arm including at a tip thereof a gripping part configured to grip the workpiece, the second arm causing the workpiece to rock through repetitive two-way rotations.

According to this, a corner of the workpiece and surfaces extending thereto are ground and burr, etc. is removed. Further, by the grinding member reciprocating linearly, tight spots are ground while maintaining its smoothness so that the burr, etc. is removed. In addition, since the movements of the first and second arms are simple including the linear reciprocation and the repetitive two-way rotations, it is easy to teach these movements.

The second arm may cause the workpiece to rock through repetitive two-way rotations about an axis orthogonal to directions in which the at least one grinding member reciprocates linearly. Thus, edges of the workpiece and the corners extending thereto are efficiently ground.

The at least one grinding member may include a plurality of grinding members, the plurality of grinding members being spaced in circumferential directions around an axis of the first arm and revolve about the axis. Thus, by revolving the plurality of grinding members about the axis of the first arm, the grinding members are placed at a given positional relationship with respect to the workpiece.

The first arm may further include a suction part, the suction part being configured to deliver the workpiece adhering thereto due to suction, to the gripping part. Thus, even a small or thin workpiece is adheres to the suction part and delivered to the gripping part.

The first arm may further include a camera, and the workpiece adhering to the suction part may be positioned with respect to the gripping part based on an image captured by the camera. Thus, the workpiece and the gripping part can be placed at a given positional relationship based on the image of the workpiece captured by the camera.

The grinding device may include a robot including the first arm and the second arm. Thus, by using a general-purpose robot of which the tip end is replaceable, the grinding work is possible only by replacing the tip ends.

### [Effects of the Disclosure]

The present disclosure includes the structure described above, and thus produces the effects of easily performing grinding including deburring and chamfering at tight spots.

### BRIEF DESCRIPTION OF DRAWINGS

Fig. 1 is a plan view schematically illustrating an overall structure of an example of a robot to which a grinding device according to Embodiment 1 is applied.
Fig. 2 is a functional block diagram schematically illustrating a structure of a controller of the robot of Fig. 1.
Fig. 3 is a perspective view schematically illustrating a state in which a camera captures an image of a workpiece.
Fig. 4 is a perspective view schematically illustrating a state in which the workpiece adhered to a suction part due to suction is delivered to a gripping part.
Fig. 5 is a perspective view schematically illustrating a state in which the workpiece is ground by a first grinding member.
Fig. 6 is a perspective view schematically illustrating a state in which the workpiece is ground by a second grinding member.

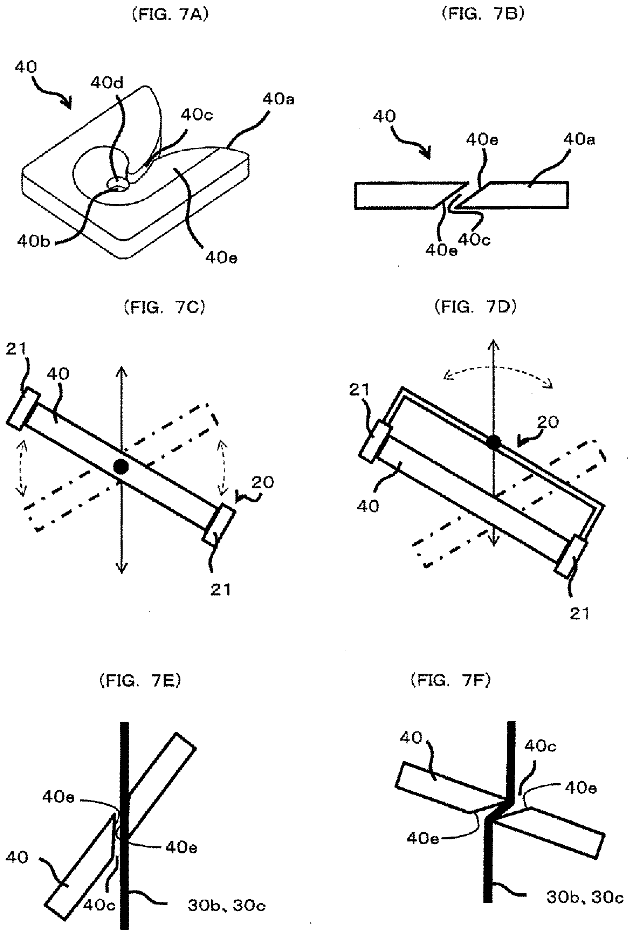

Fig. 7A is a perspective view of the workpiece, Fig. 7B is a plan view of the workpiece from a bottom end side thereof, Fig. 7C is a plan view from the bottom end side illustrating the state in which the workpiece rocks coaxially, Fig. 7D is a plan view from the bottom end side illustrating a state in which the workpiece rocks eccentrically, Fig. 7E is a plan view from the bottom end side illustrating a state in which split surfaces are ground by a grinding member, and Fig. 7F is a plan view from the bottom end side illustrating a state in which corners extending to the split surfaces are ground by the grinding member.

### MODES FOR CARRYING OUT THE DISCLOSURE

Preferable embodiments will be described below with reference to the drawings. Note that, in the following, the same or corresponding elements are denoted by the same referential characters throughout the drawings to omit redundant description. Moreover, the drawings illustrate each element schematically for easier understandings. Further, directions in which a pair of arms are outstretched are referred to as left-and-right directions, directions parallel to an axial center of a base shaft are referred to as vertical directions, and directions orthogonal to the left-and-right directions and the vertical directions are referred to as front-and-rear directions.

### (Embodiment 1)

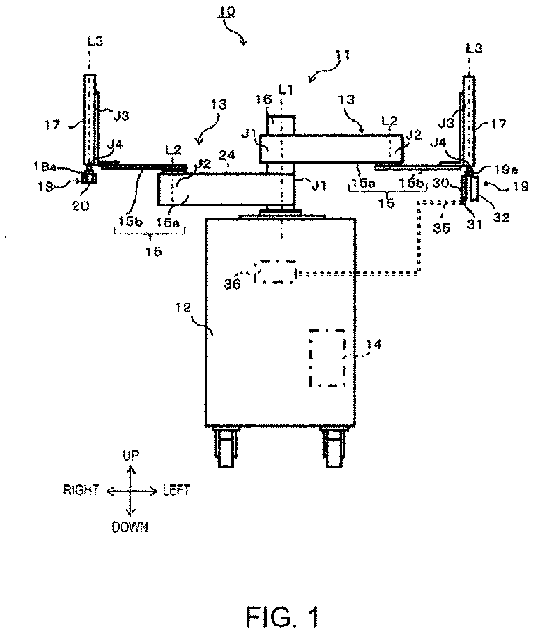

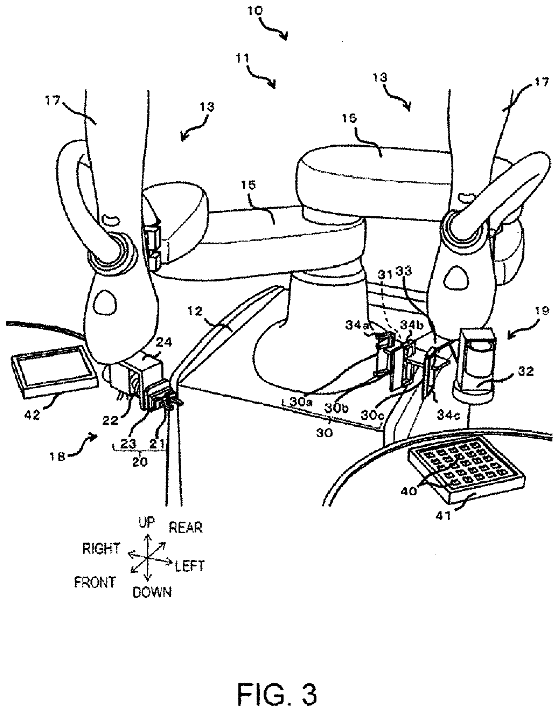

A grinding device 10 according to Embodiment 1 is a device capable of grinding a workpiece 40 (see Fig. 3) for deburring, chamfering, etc. The following describes the case in which the grinding device 10 according to the present disclosure is a robot 11 illustrated in Fig. 1. Note that the grinding device 10 is not limited to the device being the robot 11. As the robot 11, a horizontal articulated dual-arm robot is described below. Note that other robots such as a horizontal articulated robot and a vertical articulated robot may be employed.

As illustrated in Fig. 1, the robot 11 includes a carriage 12, a pair of robot arms (hereinafter, may simply be referred to as "arms") 13 supported by the carriage 12, and a controller 14 accommodated inside the carriage 12. Each arm 13 is a horizontal articulated robot arm, and includes an arm part 15, a wrist part 17, and a hand part 18 or 19. Note that the left arm 13 and the right arm 13 may have substantially the same structure except for the hand parts 18 and 19. Moreover, the left arm 13 and the right arm 13 may operate independently or operate in association with each other.

In this example, the arm part 15 includes a first link 15a and a second link 15b. The first link 15a is coupled to a base shaft 16 fixed to an upper surface of the carriage 12 through a rotary joint J1, and is revolvable about a rotation axis L1 passing through the axial center of the base shaft 16. The second link 15b is coupled to a tip of the first link 15a through a rotary joint J2, and is revolvable about a rotation axis L2 defined at the tip of the first link 15a.

The wrist part 17 is coupled to a tip of the second link 15b through a linear-motion joint J3, and is ascendable and descendible with respect to the second link 15b. Each of the hand parts 18 and 19 is coupled to a lower end of the wrist part 17 through a rotary joint J4, and is revolvable about a rotation axis L3 defined at the lower end of the wrist part 17. In this embodiment, the rotation axis L3 extends in the vertical directions.

The right hand part 18 includes an attaching part 18a through which the right hand part 18 is removably attached to the wrist part 17, and a gripping part 20 which grips the workpiece 40. The gripping part 20 is provided at a tip of the right arm (second arm). Details of the right hand part 18 will be described later.

The left hand part 19 includes an attaching part 19a through which the left hand part 19 is removably attached to the wrist part 17 and a grinding member 30 which grinds the workpiece 40. The grinding member 30 is provided to a tip of the left arm (first arm) 13. Details of the left hand part 19 will be described later.

The left hand part 19 may further include a suction part 31 to which the workpiece 40 adheres due to suction, and the suction part 31 is provided to the tip of the left arm (first arm) 13. The suction part 31 is connected to a vacuum generating device 36 via a piping 35. The vacuum generating device 36 is a device which generates a negative pressure at the suction part 31, such as a vacuum pump or CONVUM®, and is provided to the carriage 12 or the arm 13. The piping 35 is provided with, for example, an on-off valve (not illustrated). Opening and closing the piping 35 with the on-off valve allow the suction and the stopping of the suction by the suction part 31, respectively. The operation of the vacuum generating device 36 and the opening and closing of the on-off valves are controlled by the controller 14. Thus, the vacuum generating device 36 performs the suction via the suction part 31 such that the workpiece 40 adheres thereto.

Each of the arms 13 having the structure described above has the joints J1 to J4. The arm 13 is provided, for example, with driving servo motors (not illustrated) corresponding to the joints J1 to J4 and with encoders (not illustrated) which detect rotational angles of the respective servo motors. Moreover, the rotation axes L1 of the first links 15a of the two arms 13 are located on the same straight line, and the first link 15a of one of the arms 13 and the first link 15a of the other one of the arms 13 are disposed with a height difference therebetween.

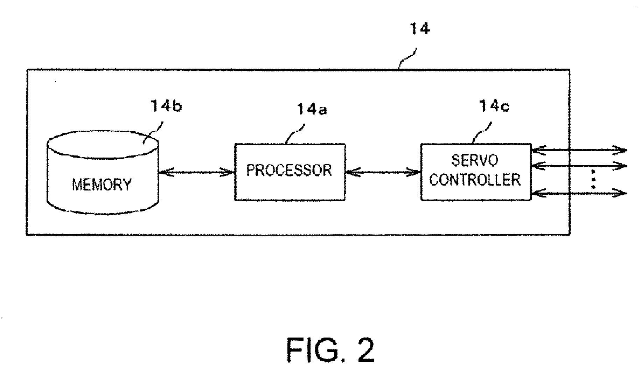

As illustrated in Fig. 2, the controller 14 includes a processor 14a, such as a CPU, a memory 14b, such as a ROM and a RAM, and a servo controller 14c. The controller 14 is a robot controller provided with a computer, such as a microcontroller. Note that the controller 14 may be configured as a sole controller 14 which carries out an integrated control, or may be configured as a plurality of controllers 14 which collaborate mutually to carry out a distributed control.

The memory 14b stores information, such as a basic program as a robot controller, various fixed data, etc. The processor 14a controls various movements of the robot 11 by reading and executing software, such as the basic program in the memory 14b. That is, the processor 14a generates control commands for the robot 11, and outputs them to the servo controller 14c. The servo controller 14c is configured to control driving of the servo motors corresponding to the joints J1 to J4 of each arm 13 of the robot 11 based on the control commands generated by the processor 14a.

Next, the right hand part 18 and the left hand part 19 are described with reference to Figs. 3 to 6. Note that Figs. 3 to 6 eliminate the piping 35 for easier understandings. The right hand part 18 includes the gripping part 20 and the left hand part 19 includes the grinding member 30. Alternatively, the right hand part 18 may include the grinding member 30 and the left hand part 19 may include the gripping part 20.

The left hand part 19 includes a camera 32 in addition to the grinding member 30 and the suction part 31. These components are individually attached to a base (left base) 33. The left base 33 is connected to the wrist part 17 and revolves about the rotation axis L3 (see Fig. 1) extending in the vertical directions.

The left hand part 19 is provided with one or more grinding members 30 (three grinding members 30 in this embodiment). For example, the three grinding members 30 are a first grinding member 30a, a second grinding member 30b, and a third grinding member 30c, are spaced in the circumferential directions around the axis of the arm 13, and revolve about the axis. For the robot 11, the axis of the arm 13 is the rotation axis L3 of the wrist part 17 extending in the vertical directions of the wrist part 17.

The first grinding member 30a is, for example, an abrasive cord which is a metal wire having a surface provided with abrasive grains or a large number of fine grooves and/or projections. The first grinding member 30a may be deformable. The first grinding member 30a extends in the vertical directions, with its upper and lower ends fixed to a first support member 34a having a C-shape, and is attached to the left base 33 via the first support member 34a. The first support member 34a extends in the radial directions with respect to the axis of the wrist part 17.

The second grinding member 30b and the third grinding member 30c are flat files and may be emery clothes being thin fabrics into which a resin such as nylon is knitted. In this case, the second grinding member 30b and the third grinding member 30c are pliant, have elasticity and flexibility, and may be deformable. These members are the same size as or greater than an object to be ground, namely, a split surface 40e, which will be described later. Of the dimensions of these members, the dimension in the vertical directions is the longest and the thickness dimension orthogonal to the vertical directions is the shortest.

The second grinding member 30b is located between the first grinding member 30a and the third grinding member 30c, and is coarser than the third grinding member 30c. The second grinding member 30b is fixed to a second support member 34b having a C-shape, and is attached to the left base 33 via the second support member 34b. The third grinding member 30c is fixed to a third support member 34c having a C-shape, and is attached to the left base 33 via the third support member 34c. The second grinding member 30b and the third grinding member 30c are arranged, with the thickness directions thereof corresponding to the circumferential directions around the axis of the wrist part 17. The grinding surface of the second grinding member 30b, the grinding surface of the third grinding member 30c, the second support member 34b, and the second support member 34b extend in the radial directions with respect to the axis of the wrist part 17.

The suction part 31 may, for example, deliver the workpiece 40 from a first pallet 41 to the gripping part 20, and transfer the ground workpiece 40 from the gripping part 20 to a second pallet 42. The tip of the suction part 31 is a suction pad formed from an elastic material such as rubber, and has a shape of a cap which opens downwardly. The suction part 31 is attached to the lower surface of the second support member 34b, with the opening of the suction part 31 oriented downwardly. The position of the suction part 31 is not limited to the above, as long as being attached to any part of the lower portion of the left hand part 19. For example, the suction part 31 may be attached to the lower surface of the first support member 34a, the third support member 34c, or the camera 32.

The suction part 31 is connected to the wrist part 17 via the second support member 34b and the left base 33. Thus, the suction part 31 revolves about the axis extending in the vertical directions in conjunction with the revolution of the wrist part 17, and the orientation of the suction part 31 and the orientation of the workpiece 40 adhering to the suction part 31 are changeable in a plane orthogonal to the vertical directions.

The camera 32 captures an image of the workpiece 40 on the first pallet 41, and outputs the captured image to the controller 14. The controller 14 analyzes the image to determine the orientation of the workpiece 40. The camera 32 is attached to the left base 33, with the spacing from the individual grinding members 30, and extends in the radial directions with respect to the axis of the wrist part 17.

The right hand part 18 includes the gripping part 20, and the gripping part 20 is attached to a base (right base) 23. The right base 24 is connected to the wrist part 17, and revolves about the axis extending in the vertical directions in conjunction with the revolution of the wrist part 17.

The gripping part 20 includes, for example, a pair of pinching members 21. The pair of pinching members 21 extend in the directions orthogonal to the vertical directions, and is attached to the right base 24 via an adjustment member 23. The pair of pinching members 21 are connected with a rocking member 22.

The rocking member 22 is connected to, for example, an actuator (not illustrated), and is attached to the gripping part 20 to allow repetitive two-way rotations of the pair of pinching members 21. During the repetitive two-way rotations, the pair of pinching members 21 may revolve in two directions in a given angle about the axis extending in the directions orthogonal to the vertical directions. Thus, the pair of pinching members 21 move along an arc centered on the axis extending in the directions orthogonal to the vertical directions. The axis of the motion is not limited to the axis extending in the directions orthogonal to the vertical directions.

For examples, as illustrated in Figs. 7C and 7D, the workpiece 40 rotates repeatedly in two directions about the ration axis (indicated by the black dot) orthogonal to the directions (indicated by the arrows) in which the individual grinding members 30 reciprocate linearly as will be described below. The rotation axis may be parallel to the axis of the workpiece 40 as illustrated in Fig. 7C, and may be placed eccentrically with respect to and away from the workpiece 40. The directions of the axis of the repetitive two-way rotations are not limited to the directions orthogonal to the directions of the linear reciprocation.

The adjustment member 23 is connected to, for example, an actuator (not illustrated), moves linearly, and is connected to one or both of the pinching members 21 provided in pair so as to change the distance between the pair of pinching members 21. The adjustment member 23 allows the pair of pinching members 21 to reduce the distance therebetween and to grip and hold the workpiece 40 accordingly.

With reference to Figs. 3 to 7, the following describes the procedure to grind the workpiece 40 for deburring, chamfering, etc., by using the robot 11 described above. This procedure is governed by the controller 14.

As illustrated in Fig. 3, the first pallet 41 is placed on the left front side of the robot 11, and the workpiece 40 is placed on the first pallet 41. The second pallet 42 is placed on the right front side of the robot 11.

As illustrated in Fig. 7A, the workpiece 40 is, for example, a plate-like component having a rectangular shape, has a through-hole 40b at the center thereof, and has a slit 40c linking the through-hole 40b to one edge of the plate-like component. Note that, for easier understandings, the slit 40c in Figs. 7B to 7F is wider than it actually is.

The workpiece 40 of Fig. 7A is, for example, a thread guide for a sewing machine and is formed from ceramics. The workpiece 40 is commonly ground before being hardened by sintering. The workpiece 40 is a substantially plate-like component having a substantially rectangular shape and has two opposed main surfaces. One edge of the workpiece 40 is referred to as a bottom edge 40a, the edge parallel and opposed to the bottom edge 40a is referred to as a top edge, and two edges located between the bottom edge 40a and the top edge and orthogonal to these edges are referred to as side edges.

The workpiece 40 has the through-hole 40b and the slit 40c. The through-hole 40b has, for example, a cylindrical shape, extends through the two opposed main surfaces, and is surrounded by an inner circumferential surface 40d. The slit 40c is formed between the through-hole 40b and the bottom edge 40a. As illustrated in Fig. 7B, when the workpiece 40 is viewed from the bottom edge 40a, the slit 40c is an oblique split extending between one main surface and the other main surface and from one side edge toward the other side edge, and is defined as a gap between two opposed split surfaces 40e. Each of the split surfaces 40e is flat and oblique to each main surface. The width of the slit 40c is close to, for example, the diameter of a sewing thread.

The workpiece 40 is designed such that a sewing thread is slid through the slit 40c between the two opposed split surfaces 40e, into the through-hole 40b surrounded by the inner circumferential surface 40d. To avoid any breakage of the sewing thread caused by friction, the grinding needs to be performed on the inner circumferential surface 40d of the through-hole 40b and the corners extending thereto and on the split surfaces 40e and the corners extending thereto. These areas to be ground are not on the same plane, and are small and very complex.

Thus, the left hand part 19 is moved by the arm part 15 and the wrist part 17 such that the camera 32 is placed above the workpiece 40 on the first pallet 41. The camera 32 captures an image of the workpiece 40, and outputs the captured image to the controller 14.

The left base 33 revolves via the wrist part 17 to move the suction part 31 to the position above the captured workpiece 40. The suction part 31 is lowered by the wrist part 17 to allow the workpiece 40 to adhere to the suction part 31 due to suction. The workpiece 40 adhering to the suction part 31 is lifted by the wrist part 17, and the workpiece 40 is moved by the arm part 15. Consequently, the workpiece 40 is transferred from the first pallet 41 to the gripping part 20 by the wrist part 17 and the arm part 15.

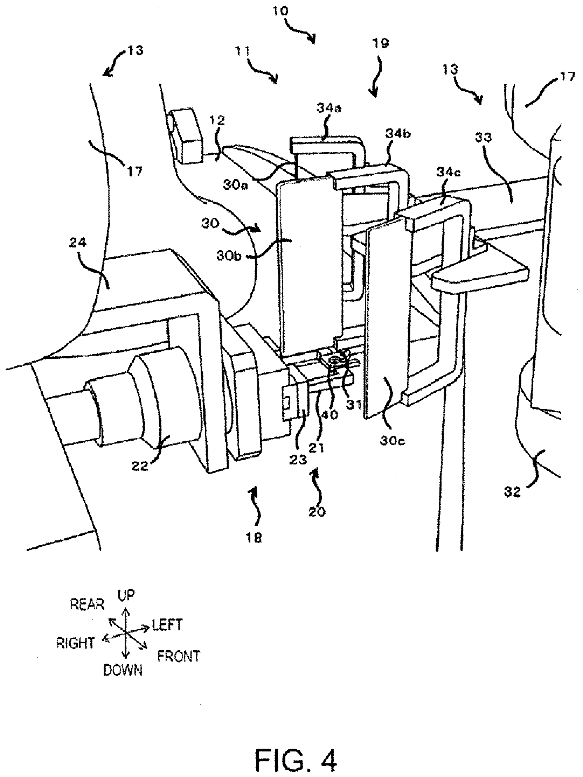

In this process, the controller 14 determines the orientation of the workpiece 40 based on the image of the workpiece 40 captured by the camera 32, and positions the workpiece 40 with respect to the gripping part 20 based on the determination result. For example, as illustrated in Fig. 4, the workpiece 40 is reoriented, with the top edge of the workpiece 40 on the adjustment member 23 side and the side edges of the workpiece 40 between the pair of pinching members 21.

Then, the workpiece 40 is gripped by the pair of pinching members 21 and the suction through the suction part 31 is stopped. The workpiece 40 is held by the gripping part 20 accordingly. The bottom edge 40a of the workpiece 40 is located on the left hand part 19 side.

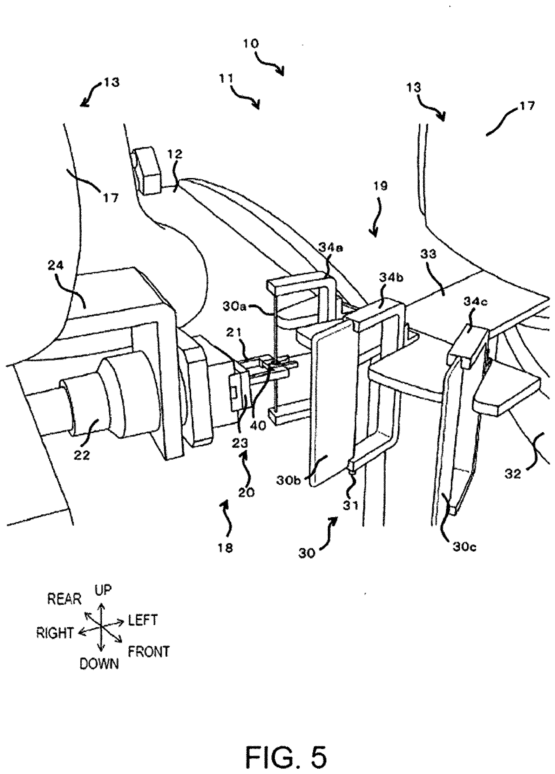

As illustrated in Fig. 5, the first grinding member 30a is slid from the bottom edge 40a of the workpiece 40 through the slit 40c into the through-hole 40b. While the first grinding member 30a is held against the inner circumferential surface 40d of the through-hole 40b, the first grinding member 30a reciprocates in the vertical directions via the wrist part 17. As illustrated in Figs. 7C and 7D, the gripping part 20 rocks via the rocking member 22. Thus, the workpiece 40 rocks in conjunction with the repetitive two-way rotations of the rocking member 22. The axis of the rocking member 22 extends in the directions orthogonal to the directions in which the first grinding member 30a reciprocates linearly (extends in the left-and-right directions in this embodiment).

Thus, the first grinding member 30a reciprocates linearly while the entirety of the target area including the inner circumferential surface 40d around the workpiece 40 and the corners extending thereto is in contact with the first grinding member 30a. This enables comprehensive grinding of the target area around the through-hole 40b of the workpiece 40, for deburring, chamfering, etc.

Subsequently, the first grinding member 30a is shifted to the left side, and is removed from the through-hole 40b of the workpiece 40 through the slit 40c. Then, with the revolution about the axis of the wrist part 17, the second grinding member 30b is placed in front of the workpiece 40 as the first grinding member 30a was previously placed.

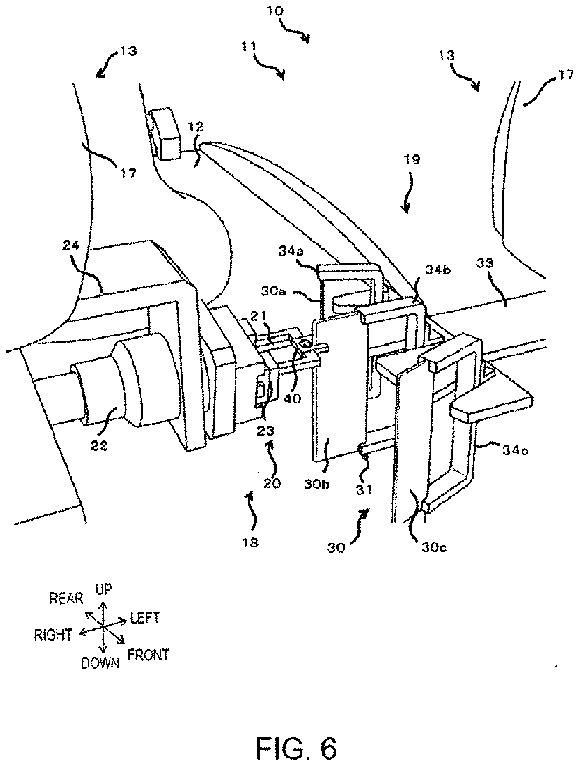

As illustrated in Fig. 6, the second grinding member 30b is shifted to the gripping part 20 side and slid into the slit 40c. As in the previous process, the second grinding member 30b reciprocates in the vertical directions while the second grinding member 30b is held against the split surfaces 40e in the slit 40c, and the gripping part 20 rocks via the rocking member 22. Thus, as illustrated in Figs. 7C or 7D, the second grinding member 30b for the workpiece 40 reciprocates linearly during the repetitive two-way rotations of the workpiece 40 about the axis of the rocking member 22.

Thus, as illustrated in Fig. 7E, the second grinding member 30b is in parallel contact with the flat split surfaces 40e. As illustrated in Fig. 7F, the second grinding member 30b is also in contact with the corners extending to the split surfaces 40e. The second grinding member 30b is formed of, for example, a pliant emery cloth. Thus, the second grinding member 30b is capable of grinding the corners extending to the split surfaces 40e while being deformed along the corners. This enables comprehensive grinding of the split surfaces 40e of the workpiece 40 and the corners extending thereto, for more reliable deburring, chamfering, etc.

Then, as in the previous process, the second grinding member 30b is shifted to the left side, and is removed from the workpiece 40 through the slit 40c. Subsequently, the wrist part 17 revolves about its axis, so that the third grinding member 30c is placed in front of the workpiece 40. The third grinding member 30c is slid into the slit 40c, and is held against the split surfaces 40e in the slit 40c. The gripping part 20 rocks via the rocking member 22 while the third grinding member 30c reciprocates in the vertical directions. Thus, the third grinding member 30c is capable of comprehensively grinding the split surfaces 40e of the workpiece 40 and the corners extending thereto, for more reliable deburring, chamfering, etc.

The upper surface of the workpiece 40 ground as described above adheres to the suction part 31 again due to suction. In addition, the distance between the pair of pinching members 21 is increased, so that the workpiece 40 is released from the gripping part 20. The workpiece 40 is held by the suction part 31 accordingly, and is transferred from the gripping part 20 to the second pallet 42.

Owing to the above structure, the grinding member 30 reciprocates linearly, and the workpiece 40 rocks through the repetitive two-way rotations about the axis orthogonal to the directions in which the grinding members 30 reciprocate linearly. Consequently, the workpiece 40 is ground not only in part (e.g., edges) but also in their surrounding areas, leading to easy and reliable deburring and chamfering.

Each of the grinding members 30 extends linearly in the vertical directions, and is thinner in the thickness direction orthogonal to the vertical directions. The grinding members 30 reciprocate linearly in the vertical directions. Thus, small and confined areas of the workpiece 40, such as the through-hole 40b and the slit 40c, are ground to be smooth.

If one of the arms 13 is fixed, the other one of the arms 13 alone would be unable to simulate the above movements unless its movable parts are taught complex movements. In contrast, the movements described herein are simple, that is, the movement of the first arm 13 is the linear reciprocation and the movement of the second arm 13 includes the linear reciprocation and the repetitive two-way rotations. Thus, it is easy to teach these movements.

The grinding members 30 are spaced in the circumferential directions around the axis of the arm 13, and revolve about the axis. The revolution of the left hand part 19 about the axis of the arm 13 ensure the constant positional relationship between the workpiece 40 and each of the grinding members 30 placed in front of the workpiece 40. This eliminates the need for adjusting the position of the grinding member 30 with respect to the workpiece 40.

The suction part 31 delivers the workpiece 40 adhering thereto, to the gripping part 20. For example, even if the workpiece 40 has a small thickness, the suction part 31 easily picks up the workpiece 40 more securely, and delivers it to the gripping part 20.

The workpiece 40 adhering to the suction part 31 is positioned with respect to the gripping part 20 based on the image captured by the camera 32. The gripping part 20 accordingly holds the workpiece 40 while keeping it oriented in the intended direction, so that the relationship between the orientation of the workpiece 40 gripped by the gripping part 20 and the orientation of each of the grinding members 30 oriented in the intended directions is kept constant. Thus, the workpiece 40 is ground by the individual grinding members 30 held against it at intended angles.

The grinding device 10 is the robot 11 including the first arm 13 and the second arm 13. In the grinding device 10, the gripping part 20 is removably attached to the wrist part 17 of the right arm 13 via the attaching part 18a, and the individual grinding members 30 are removably attached to the wrist part 17 of the left arm 13 via the attaching part 19a. The general-purpose robot 11 of which the tip ends such as the gripping part 20 and the individual grinding members 30 are replaceable necessitates only replacement of these tip ends for the grinding work on the workpiece 40.

Although the right hand part 18 is coupled to the wrist part 17 via the attaching part 18a in the above embodiment, the right hand part 18 may be directly coupled to the wrist part 17. Although the right hand part 19 is coupled to the wrist part 17 via the attaching part 19a, the left hand part 19 may be directly coupled to the wrist part 17.

From the above description, it is apparent for a person skilled in the art that many improvements and other embodiments of the present disclosure are possible. Therefore, the above description is to be interpreted only as illustration, but is provided in order to teach a person skilled in the art the best modes that implement the present disclosure. Details of the structures and/or functions of the present disclosure may substantially be changed without departing from the spirit of the present disclosure.

### INDUSTRIAL AVAILABILITY

The present disclosure is useful for the grinding device, etc., capable of easily performing grinding including deburring and chamfering at tight spots.

### DESCRIPTION OF REFERENCE CHARACTERS

10: Grinding Device
11: Robot
13: Arm
20: Gripping Part
22: Gripping Member
30: Grinding Member
30a: First Grinding Member (Grinding Member)
30b: Second Grinding Member (Grinding Member)
30c: Second Grinding Member (Grinding Member)
31: Suction Part
32: Camera
40: Workpiece

## Claims

1. A grinding device comprising:
a first arm including at a tip thereof at least one grinding member configured to grind a workpiece, the first arm causing the at least one grinding member to reciprocate linearly; and
a second arm including at a tip thereof a gripping part configured to grip the workpiece, the second arm causing the workpiece to rock through repetitive two-way rotations.

2. The grinding device according to claim 1, wherein the second arm causes the workpiece to rock through repetitive two-way rotations about an axis orthogonal to directions in which the at least one grinding member reciprocates linearly.

3. The grinding device according claim 1 or 2, wherein the at least one grinding member comprises a plurality of grinding members, the plurality of grinding members being spaced in circumferential directions around an axis of the first arm and revolve about the axis.

4. The grinding device according to any one of claims 1 to 3, wherein the first arm further includes a suction part, the suction part being configured to deliver the workpiece adhering thereto due to suction, to the gripping part.

5. The grinding device according to claim 4, wherein
the first arm further includes a camera, and
the workpiece adhering to the suction part is positioned with respect to the gripping part based on an image captured by the camera.

6. The grinding device according to any one of claims 1 to 5, comprised of a robot including the first arm and the second arm.
